# DEMANDE DE BREVET EUROPEEN

(11) **EP 1 816 534 A1**
(43) Date de publication de la demande: **08.08.2007**
(21) Numéro de dépôt: 06101172.2
(22) Date de dépôt: 01.02.2006
(51) Int. Cl.: G05B 19/42

(54) **Methode de programmation d'un actuateur electrique et actuateur electrique pour la mise en oeuvre de cette methode**

(71) Demandeur: Dynamic Motion SA, 2300 La Chaux-de-Fonds (CH)
(72) Inventeur: VAUCHER, Bernard, 2300, La Chaux-de-Fonds (CH)
(74) Mandataire: GLN

(57) **Abrégé**

La présente invention concerne une méthode de programmation d'un actuateur électrique qui comprend les étapes suivantes:
- enclenchement d'un mode d'apprentissage,
- déplacement manuel du chariot dans une première position extrême,
- déplacement manuel du chariot dans une deuxième position extrême,
- enregistrement dans la mémoire des première et deuxième positions extrêmes,
- sortie du mode d'apprentissage.

L'invention concerne en outre un actuateur tel que défini ci-dessus, particulièrement adapté pour la mise en oeuvre de cette méthode.

## Description

### Domaine technique

La présente invention se rapporte au domaine des actuateurs industriels, actionnés par l'énergie électrique. Elle concerne une méthode de programmation d'un actuateur électrique et un tel actuateur particulièrement adapté pour mettre en oeuvre cette méthode.

### Etat de la technique

Les actuateurs électriques sont largement répandus dans le milieu industriel pour transporter des pièces ou comme actionneurs, car ils présentent de nombreux avantages par rapport aux actuateurs pneumatiques ou hydrauliques. Particulièrement, ils permettent d'éviter les inconvénients liés à la mise en place des circuits pneumatiques ou hydrauliques. De plus, leur fonctionnement est moins bruyant et permet aux utilisateurs de travailler dans de meilleures conditions.

Un actuateur électrique conventionnel comprend un bâti et, logé dans celui-ci, un moteur pour être connecté à un circuit d'alimentation électrique. Le moteur transmet son énergie par l'intermédiaire d'un arbre à un dispositif d'entraînement, également disposé dans le bâti, tel qu'une vis à bille ou une courroie crantée. Ce dispositif d'entraînement fait se déplacer un élément mobile, comme un chariot se déplaçant au moyen d'un guide solidaire du bâti. Ce chariot est destiné à supporter des pièces ou à réaliser les actions pour lesquelles l'actuateur est prévu. Dans certains actuateurs, l'élément mobile est un bras d'une pince articulée ou un plateau rotatif.

De manière courante, les conditions de déplacement du chariot (vitesse, accélération...) sont déterminées et programmées durant la phase de mise en service de l'actuateur, par l'intermédiaire d'un ordinateur communiquant avec des moyens électroniques disposés dans un boîtier séparé du bâti ou parfois intégré dans celui-ci. Il est nécessaire à un utilisateur de se familiariser avec un langage de programmation souvent propre à un actuateur et de prévoir les moyens de connexion entre l'actuateur et l'ordinateur.

Les moyens électroniques de l'actuateur déterminent la position relative du chariot grâce à des codeurs et calcule la distance parcourue entre la position instantanée et une position de référence prédéfinie qu'il a en mémoire ou qu'il détermine. Or, dans le cas d'une mise hors tension, par exemple du fait d'une coupure de courant, le chariot est comme perdu car il n'a plus en mémoire la distance parcourue depuis la position de référence. Il est alors nécessaire de reprendre une procédure de calibration de manière à ce que l'actuateur puisse redéfinir la position relative du chariot par rapport à la position de référence. Ceci occasionne des pertes de temps importantes et peut entraîner des dysfonctionnements aux conséquences fâcheuses si la mise hors tension n'a pas été détectée.

De plus, en fonctionnement, des butées physiques et/ou des détecteurs renseignent les moyens électroniques sur la position du chariot par rapport à la fin de course de manière à interrompre le mouvement. Ces dernières solutions ont le désavantage d'occasionner des contraintes importantes, des accélérations saccadées et des chocs répétés, qui contribuent à dégrader les conditions de travail du personnel par le bruit important généré et peuvent détériorer l'actuateur.

La présente invention a pour but de proposer une méthode pour programmer la course de l'élément mobile d'un actuateur électrique, ne nécessitant à un utilisateur l'apprentissage d'aucun langage de programmation, ni aucun branchement particulier lors de la mise en service. L'invention porte également sur un actuateur adapté à la mise en oeuvre de cette méthode et ne souffrant pas des inconvénients exposés ci-dessus.

### Divulgation de l'invention

L'invention concerne une méthode de programmation d'un actuateur électrique comprenant, logés dans un bâti,
- un moteur pour être relié à un circuit d'alimentation électrique, faisant tourner un arbre du moteur,
- un pignon porté par l'arbre du moteur et,
- une électronique dotée d'un microprocesseur pour gérer les différentes opérations à effectuer par l'actuateur,
et comportant, en outre,
- une interface homme-machine pour donner des informations au microprocesseur,
- un élément mobile solidaire d'un élément d'engrènement, en prise avec ledit pignon directement ou par l'intermédiaire d'au moins un rouage relié cinématiquement audit pignon, et
- un système de détermination de la position absolue de l'élément mobile.

Particulièrement à l'invention, la méthode comprend les étapes suivantes:
- enclenchement d'un mode d'apprentissage par l'interface homme-machine,
- déplacement manuel de l'élément mobile dans une première position extrême,
- déplacement manuel de l'élément mobile dans une deuxième position extrême,
- et enregistrement des deux positions extrêmes,
- sortie du mode d'apprentissage par l'interface homme-machine.

Un autre aspect de l'invention concerne un actuateur électrique ayant les caractéristiques citées précédemment. Un tel actuateur est particulièrement adapté pour être programmé par la méthode ci-dessus.

Dans un mode de réalisation avantageux de l'invention, l'élément d'engrènement est une crémaillère. La circonférence du pignon ou du rouage en prise avec cette crémaillère est alors supérieure à la longueur utilisée de la crémaillère, afin que le chariot puisse parcourir sa course complète tandis que le pignon ou la roue parcourent moins d'un tour. Le système de détermination de la position absolue de l'élément mobile est un codeur rotatif magnétique associé audit pignon ou à ce rouage et connecté au microprocesseur.

### Brève description des dessins

La présente invention sera mieux comprise à la lecture de la description qui suit, faite en références aux dessins annexés dans lesquels:
- la figure 1 est une vue en perspective d'un actuateur selon l'invention,
- les figures 2 et 3 sont des vues en coupe, respectivement selon les plans A-A et B-B portés par la figure 1,
- la figure 4 représente l'algorithme du fonctionnement de l'actuateur, et
- la figure 5 donne une illustration d'un modèle mathématique de trajectoire idéale, pouvant être utilisé dans la programmation du microprocesseur.

### Mode(s) de réalisation de l'invention

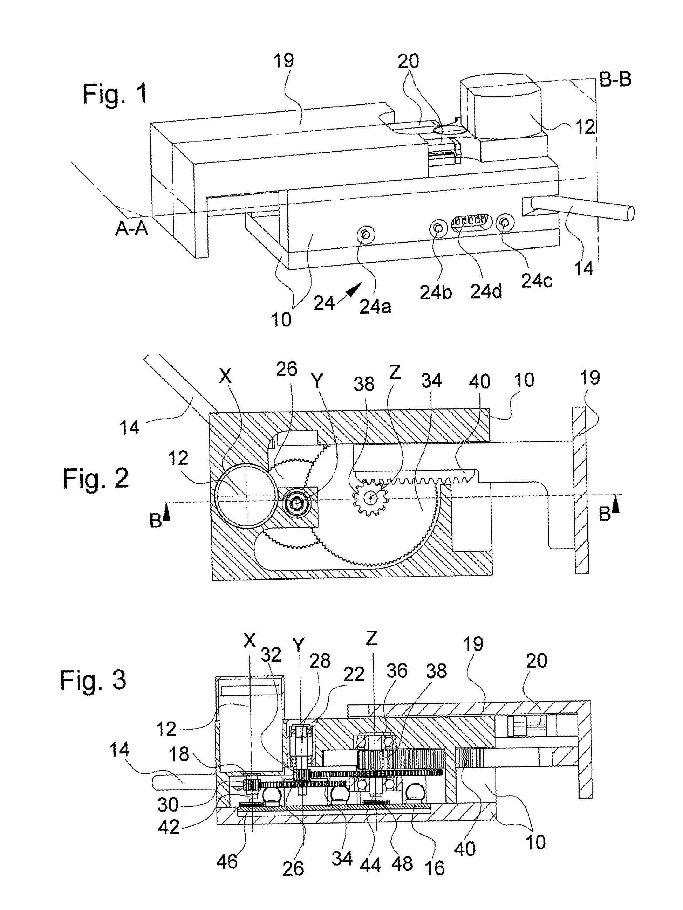

La figure 1 représente un actuateur selon l'invention. Tout comme les actuateurs de l'art antérieur, il comporte un bâti 10, dans lequel est logé un moteur 12 pour être relié à un circuit d'alimentation électrique par un ou plusieurs câble(s) 14.

De manière avantageuse, le câble 14 est disposé dans un coin du bâti 10, afin qu'il puisse être plié légèrement contre un côté ou l'autre du bâti. Ainsi, l'actuateur peut être posé sur l'une ou l'autre des faces adjacentes à ce coin en limitant les contraintes et torsions pouvant endommager le câble.

Le moteur 12 transmet son énergie à un dispositif d'entraînement qui sera décrit en détail ci-après, par l'intermédiaire d'un arbre 18 visible sur la figure 3 et pivotant selon un axe X.

Un circuit électronique 16 comportant tous les éléments électroniques nécessaires au fonctionnement de l'actuateur et qui seront détaillés ci-après, est disposé dans le bâti. Il est notamment doté d'un microprocesseur gérant le fonctionnement de l'actuateur.

L'actuateur comporte encore un chariot mobile 19 capable de se déplacer en étant guidé par deux rails parallèles 20 disposés dans le bâti 10 et dont l'extrémité est visible sur la figure 1. La direction du déplacement du chariot définit l'axe longitudinal de l'actuateur.

La figure 1 montre encore que l'actuateur comporte une interface homme-machine 24 connectée au microprocesseur et accessible depuis l'extérieur du bâti à un utilisateur. Selon l'exemple, cette interface est constituée de trois boutons de commande 24a, 24b et 24c et d'un sélecteur d'options 24d dont le rôle apparaîtra plus loin.

Le dispositif d'entraînement est situé à l'intérieur du bâti 10. Comme illustré sur les figures 2 et 3, il comprend une première roue dentée 26 pivotant autour d'un arbre 28 d'axe Y et engrenant avec un pignon 30 monté sur l'arbre 18 du moteur. Cette roue 26 est elle-même coaxiale avec un deuxième pignon 32 en prise avec une deuxième roue dentée 34 pivotant autour d'un arbre 36 d'axe Z. Cette deuxième roue 34 porte un pignon 38 qui coopère avec un élément d'engrènement tel qu'une crémaillère 40 solidaire du chariot 19. Ainsi, le mouvement de rotation de l'arbre 18 du moteur est converti en un mouvement linéaire du chariot 19. L'ensemble des roues et des pignons et la crémaillère 40 sont disposés selon des plans parallèles. De manière avantageuse, les arbres peuvent être disposés sur des excentriques, dont un est référencé en 22 pour l'arbre 28, de manière à pouvoir ajuster leur position et limiter les jeux d'engrenage. Bien que non obligatoire, un entraînement par crémaillère permet d'obtenir un meilleur rendement de la transmission de l'énergie mécanique, une meilleure robustesse et une plus grande fiabilité, par rapport aux systèmes de l'art antérieur.

Un premier 42 et un deuxième 44 aimants sont respectivement montés sur l'arbre 18 du moteur et sur l'arbre 36 d'axe Z de manière à ce que leurs pôles soient positionnés dans un plan parallèle à ceux définis par les roues et les pignons. Les aimants 42 et 44 sont positionnés en face de capteurs 46 et 48 sensibles à la position angulaire de chacun des aimants. Chaque paire aimant/capteur forme un codeur rotatif magnétique absolu sur un tour, du type fabriqué par la firme Austria Microsystems sous la référence AS5040. Basé sur les propriétés de l'effet Hall, ces codeurs permettent de fournir la position angulaire de leur aimant et donc, celle de l'arbre qui porte cet aimant.

Chaque capteur 46,48 est monté sur le circuit électronique 16 et est connecté au microprocesseur qui, à partir des informations reçues sur la position angulaire des aimants 42,44, détermine la position du pignon 30 et de la roue 34.

Un avantage important du dispositif selon l'invention est de disposer de moyens pour déterminer la position absolue du chariot. Ainsi, même après une mise hors tension, par exemple du fait d'une coupure de courant, le microprocesseur connaît la position exacte du chariot, sans qu'il soit nécessaire de recalibrer l'actuateur par rapport à une position de référence.

Dans le dispositif selon le mode de réalisation représenté sur les figures, la détermination de la position absolue du chariot est permise par le fait que la circonférence du rouage qui est en prise avec la crémaillère est supérieure à la longueur utilisée de celle-ci. Ainsi, l'information donnée par le codeur couplé à l'arbre 36 d'axe Z permet de fournir de manière bijective une information sur la position angulaire absolue de la roue 34 et du pignon 38, mais aussi sur la position longitudinale absolue de la crémaillère 40 et donc sur celle du chariot 19.

Un algorithme accessible à l'homme du métier tenant compte du rapport de réduction entre les capteurs, des positions initiales de ces derniers et du jeu entre les engrenages permet de recomposer la position absolue.

Si pour des raisons d'encombrement, la dernière roue ne peut pas avoir une circonférence plus grande que la crémaillère, un système de réducteur mécanique avec un ou plusieurs capteur(s) associés permet à la roue du dernier étage de réduction, dont la position est prise en compte par un codeur, de ne pas faire plus d'un tour pour la course totale de la crémaillère.

Bien entendu, la démultiplication choisie et le nombre de renvois sont donnés à titre d'illustration. La crémaillère 40 pourrait être directement entraînée par le pignon 18 disposé sur l'arbre du moteur 12, si celui-ci est agencé de manière à ce que le pignon ait une dimension suffisante.

Cependant, le fait d'avoir un premier codeur associé à l'arbre 36 du rouage coopérant avec la crémaillère 40 et un deuxième codeur associé à l'arbre 18 du moteur 12 offre un avantage particulier. En effet, pour une résolution du codeur donnée, la précision de la détermination de la position du chariot est améliorée grâce à la démultiplication apportée par le train de rouages.

Le premier codeur permet de déterminer la position du chariot de manière relativement grossière (limitée par la résolution et la précision du capteur). Or, cette détermination n'est pas suffisamment précise pour contrôler le moteur, particulièrement si le contrôle est effectué en boucle fermée, avec un algorithme PID par exemple. En effet, l'incertitude de la mesure engendrerait des oscillations gênantes.

L'information fournie par le deuxième codeur, combinée avec l'information obtenue par la lecture du premier codeur, permet de reconstituer avec une meilleure précision la position absolue du chariot. La précision et la résolution obtenues sont améliorées d'un facteur sensiblement égal au rapport de démultiplication. Un actuateur de dimension typique, c'est-à-dire de 115mm de long avec une course maximale de 30mm, offre une résolution de l'ordre de 800nm alors qu'elle n'est que de 24µm lorsque l'on utilise un seul capteur.

D'autres systèmes de détermination de la position absolue du chariot peuvent être envisagés, comme une règle linéaire absolue basée sur un système de détection optique, magnétique ou capacitif connectée au microprocesseur pour lui fournir une information absolue de la position du chariot. Le système de détermination peut aussi combiner les différentes solutions proposées, une règle optique et un codeur rotatif, par exemple, le premier permettant de déterminer la position instantanée du chariot de manière grossière et, le second, permettant une détermination plus précise.

Ainsi, après une mise hors tension, lorsque l'actuateur est à nouveau alimenté électriquement, les moyens de détermination de la position absolue du chariot renseignent immédiatement le microprocesseur sur la position du chariot, sans qu'aucune procédure particulière soit requise. Si les extrémités de la course que le chariot doit effectuer sont enregistrées dans une mémoire adaptée, alors l'actuateur peut reprendre sa tâche dès que le microprocesseur a rechargé son programme (quelques dizaines de millisecondes). Eventuellement, le microcontrôleur effectue lors de la mise sous tension, la mesure des deux capteurs à intervalle de 100ms, en alimentant le moteur légèrement dans des sens opposés entre chaque mesure, puis calcule la moyenne des mesures afin de compenser l'éventuel jeu dans les engrenages.

Grâce au fait que l'actuateur dispose d'un système de détermination de la position absolue du chariot, il peut être programmé selon une méthode qui représente un autre aspect de l'invention. La programmation concerne principalement l'apprentissage des positions extrêmes du chariot 19.

Ainsi, pour effectuer cette programmation, l'utilisateur doit enclencher un mode adéquat, au moyen de l'interface homme machine, par exemple en pressant sur le bouton 24b.

Ensuite, le chariot 19 est déplacé dans une première position extrême, par exemple celle de droite, par une action manuelle sur le bouton 24c. Plus précisément, une pression sur le bouton fait tourner lentement le moteur dans une première direction de manière à amener, de manière forcée, le chariot 19 dans la position souhaitée. La position la plus extrême atteinte par le chariot est gardée en mémoire vive.

Puis, de manière similaire à ce qui vient être décrit, le chariot 19 est déplacé dans une deuxième position extrême, celle de gauche, en pressant sur le bouton 24a. De la même manière, la position la plus extrême à gauche atteinte par le chariot 19 est gardée en mémoire vive.

Une nouvelle pression sur le bouton 24b permet de sauvegarder dans une mémoire flash non volatile (EEPROM) les deux positions extrêmes conservées en mémoire vive et de revenir à un mode de fonctionnement normal. D'autres procédures d'enregistrement des deux positions extrêmes peuvent, bien entendu, être envisagées.

De manière facultative, par exemple en appuyant deux fois sur le bouton 24b, le moteur est électriquement débrayé, de sorte qu'il est possible d'effectuer l'apprentissage tel que décrit ci-dessus, mais en déplaçant le chariot 19 directement à la main, sans utiliser l'interface homme-machine.

Eventuellement, la méthode d'apprentissage comprend une étape supplémentaire de définition de la position de repos. La position de repos du chariot 19 est celle qu'il occupe, soit en l'absence de tension de commande appliquée sur les entrées du câble, soit en présence d'un niveau "0" sur l'ensemble des entrées (câble et interface), comme il sera expliqué ci-après.

La position de repos peut correspondre à l'une des positions extrêmes ou à une position centrale par rapport à ces deux positions extrêmes. Avantageusement, elle peut être choisie au moyen du sélecteur d'options de l'interface homme-machine. Il est également possible que le sélecteur d'options puisse être actionné sans que l'actuateur doive être en mode apprentissage. De manière facultative, des positions intermédiaires autres que les positions extrêmes ou que la position centrale, peuvent être définies, soit par apprentissage séquentiel de chaque position, soit par répartition prédéfinie de ces positions.

En variante, l'interface homme-machine peut être remplacée par des commandes électriques appliquées au câble, soit depuis une télécommande connectée au câble et comportant les mêmes touches que l'interface homme-machine, soit par tout autre système pouvant générer les signaux.

Ainsi, aucun ordinateur n'est nécessaire pour programmer la course du chariot 19. Il en résulte une grande simplicité d'utilisation.

Par ailleurs, on notera que la commande des déplacements est fournie par un signal extérieur amené au microprocesseur par le(s) câble(s) d'alimentation(s) et de commande. Ce signal est typiquement une tension située entre les niveaux logiques 0 et 24V. La plage comprise entre ces valeurs peut être utilisée pour générer une information proportionnelle, par exemple sur la vitesse de déplacement du chariot 19. Ainsi, le niveau "0" d'une entrée, signifiant entrée inactive, est défini pour une tension d'entrée située entre -1 et +4V. Le niveau "1" d'une entrée, signifiant entrée active, est défini pour une tension d'entrée entre 5V et 30V. Si la tension d'entrée est située entre 5 et 20V, elle est interprétée comme valeur proportionnelle, par exemple, pour réduire la vitesse de déplacement du chariot 19, la vitesse étant minimale à 5V et maximale à 20V, la vitesse étant toujours maximale au-delà de 20V. Les signaux peuvent aussi être fournis selon un mode tout ou rien (0 ou 24V), la vitesse étant alors soit nulle, soit maximale.

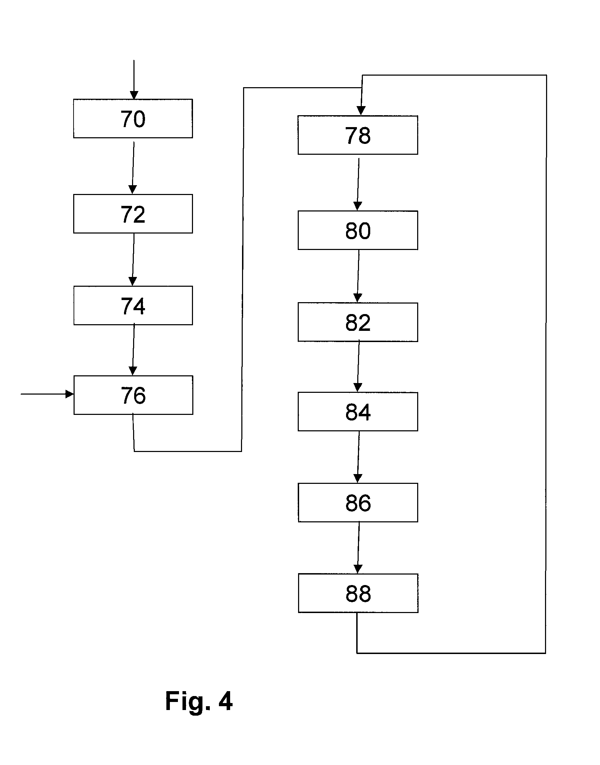

En fonctionnement, l'algorithme illustré sur la figure 4 est utilisé. Lors d'une première utilisation ou après avoir terminé un apprentissage selon la méthode ci-dessus, les données du microprocesseur sont initialisées à l'étape 70. Puis, en 72, celui-ci reçoit l'information fournie par le système de détermination de la position absolue du chariot 19 et calcule, en 74, la position instantanée à partir de ces informations.

En 76, les informations contenues dans la mémoire flash relative aux positions extrêmes du chariot 19 et au calibrage des offset des codeurs sont lues.

Ensuite commencent les opérations de routine, répétées à intervalle régulier, toutes les millisecondes dans l'exemple qui suit, permettant de gérer le déplacement du chariot 19. En 78, le microprocesseur vérifie si un signal de commande lui est envoyé, soit par l'intermédiaire des touches 24a et 24c de l'interface homme-machine, soit par le câble 14. A partir des informations collectées en 78, en 76, le microprocesseur détermine, en 80, la destination finale du chariot 19.

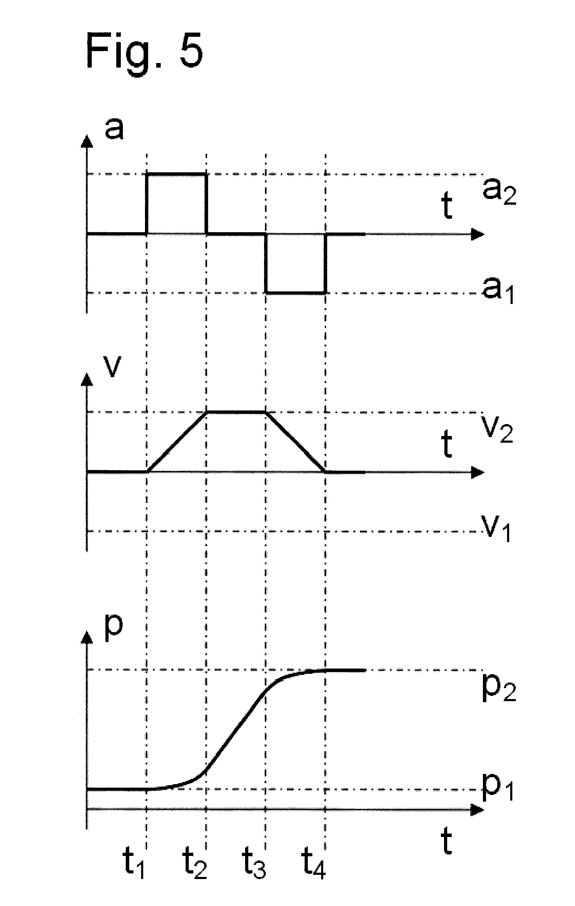

En 82, le microprocesseur utilise un modèle mathématique de trajectoire idéale dont un exemple est représenté sur la figure 5, prenant en compte des constantes d'accélération a2 et de freinage a1, de vitesses maximales positive v2 et négative v1, et la destination finale p2 du chariot 19 calculée en 80. Les valeurs de position, vitesse et accélération (et optionnellement le jerk), devant être appliqués durant la boucle suivante, c'est-à-dire pour la milliseconde suivante sont calculées itérativement, c'est à dire en se servant des mêmes valeurs (position, vitesse et accélération et optionnellement le jerk) résultant du calcul de la boucle précédente.

La figure 5 montre ainsi la position p, la vitesse v et l'accélération du chariot 19 selon l'un des modèles pouvant être utilisés. Ainsi, au temps t1, l'ordre est reçu de commencer le mouvement pour déplacer le chariot 19 de la position p1 à la position p2. A cet instant, l'accélération devient maximale et atteint la valeur a2, jusque à ce que la vitesse maximale v2 soit atteinte au temps t2. Ensuite l'accélération devient nulle et la vitesse reste constante, jusqu'au temps t3. Puis, un ordre est reçu pour freiner le chariot 19 avec une accélération de valeur a1. Lorsque la position p2 est atteinte, l'accélération et la vitesse deviennent nulles. Pour effectuer le déplacement inverse de p2 à p1, les instructions sont données symétriquement en utilisant une constante de vitesse v1.

Ensuite, en 84, la position instantanée fournie par les codeurs est relue, puis comparée avec la destination que le chariot 19 doit atteindre à la prochaine milliseconde, calculée en 82. En 86, un algorithme de suivi de consigne (basé sur un PID) calcule la tension qui doit être appliquée au moteur ou aux phase(s) du moteur. Si la comparaison entre la position mesurée et la destination finale de la trajectoire permet de déterminer que le chariot 19 est arrivé à la position finale, le signal de sortie adéquat est activé de manière à signaler la fin de la course.

Les constantes du modèle mathématique de trajectoire et du PID doivent être choisies pour optimiser la vitesse de déplacement du chariot 19 et la durée de vie du dispositif et pour minimiser les à-coups et vibrations. Pour le modèle mathématique de trajectoire, les constantes à définir sont a1, a2, v1, v2. Les constantes du régulateur PID sont typiquement Kp, Ti, Td qui sont, respectivement, les facteurs de pondération appliqués à l'écart entre la consigne, d'une part, et la position mesurée, son intégrale et sa dérivée, d'autre part. L'homme du métier pourra utiliser la méthode de Ziegler-Nichols pour obtenir Kp, Ti, Td, et des critères permettant de définir le choix des constantes a1, a2, v1 et v2.

Lorsque l'ensemble des calculs est effectué, une courte étape d'attente, est appliquée en 88 jusqu'à ce que la milliseconde de la boucle soit écoulée et que le calcul suivant puisse démarrer.

Eventuellement, l'algorithme comporte encore des étapes de contrôle et de vérification du bon fonctionnement de l'actuateur, telles que la mesure de la tension d'alimentation, la vérification du courant et un diagnostic des anomalies. Celles-ci sont accumulées dans une variable. Le cas échéant, des modifications sont appliquées aux constantes du modèle mathématique de trajectoire et du suivi de consigne et des témoins lumineux sont activés pour fournir des messages d'alerte à l'utilisateur.

Avantageusement, le moteur est alimenté en PWM (de l'anglais Pulse Width Modulation), ce qui permet un meilleur rendement énergétique par rapport à une alimentation classique. Dans ce cas, l'algorithme comprend encore des étapes de calcul des signaux PWM à fournir.

Comme évoqué plus haut, c'est lors de l'étape 84 de l'algorithme qu'une grande précision et une bonne résolution du système de détermination de la position absolue est requise et que la présence des deux codeurs est utile, ou que, selon un autre exemple donné, la règle optique et le codeur sont utilisés en combinaison.

Ainsi est proposé un actuateur électrique dont le chariot 19 atteint en douceur l'une ou l'autre de ses positions extrêmes sans venir heurter de butée physique, comme cela se passe avec certains dispositifs de l'état de la technique. Le fonctionnement de l'actuateur est ainsi beaucoup plus doux, avec moins d'à-coups, diminuant la sollicitation mécanique des éléments qui le composent.

Grâce au fait que l'ensemble des éléments électronique est contenu dans l'actuateur et que le dispositif permet de mettre en oeuvre la méthode d'apprentissage décrite ci-dessus, l'utilisateur n'a pas besoin de le connecter à un ordinateur pour le programmer et n'a donc pas besoin d'apprendre un langage de programmation particulier. De plus, il est extrêmement simple de modifier les positions extrêmes de la course du chariot 19.

L'invention n'est pas limitée aux exemples mentionnés dans la description ci-dessus. En effet, le moteur peut être de type à courant continu (DC), brushless synchrone (BLDC et BLAC), asynchrone (AC), pas à pas et à entraînement direct. Dans ce dernier cas, les moyens de détermination de la position de l'élément mobile de l'actuateur fonctionnent selon un mode linéaire (règle linéaire absolue).

L'invention peut aussi être appliquée à un actuateur de type rotatif ou pince. Dans ces derniers cas, l'élément mobile peut être soit un plateau, soit un bras de la pince, solidaires de l'élément d'engrènement, qui est alors une roue dentée à la place de la crémaillère. L'essentiel étant, pour utiliser comme système de détermination de la position absolue de l'élément mobile un codeur rotatif magnétique, qu'au moins un des rouages et pignon reliant cinématiquement le moteur et l'élément d'engrènement effectue moins d'un tour complet pour que l'élément d'engrènement effectue la totalité de sa course (ou de son mouvement de rotation dans le cas où il s'agit d'une roue dentée).

La même invention déclinée en version rotative offre une méthode d'apprentissage similaire et des options similaires, à savoir:
- la position de repos est enseignée par le mode d'apprentissage;
- le nombre de positions intermédiaires et le sens de rotation sont sélectionnés à l'aide du sélecteur d'options;
- durant le fonctionnement, chaque activation d'une entrée fait avancer (ou reculer) l'élément mobile jusqu'à la position définie, l'activation de l'autre entrée fait revenir le plateau à la position de repos;
- le sélecteur d'option permet également de choisir si le retour de la dernière position à la position de repos se fait en terminant le tour dans le même sens ou en revenant dans le sens inverse.

La même invention déclinée en version pince offre une méthode d'apprentissage similaire et des options similaires, à savoir:
- la position de repos (relâchée) correspondant aux entrées inactives et une ou plusieurs positions pincées sont enseignées par le mode d'apprentissage;
- le sélecteur d'options permet de régler si le pincement se fait par ouverture de la pince ou par fermeture, il permet aussi de choisir la force de pincement.

Pour l'utilisateur, le système est aussi facile à mettre en oeuvre que le système à air comprimé équivalent, avec le câblage de l'air comprimé et le réglage des courses et capteurs de fin de course en moins.

De plus, grâce à l'algorithme de fonctionnement et à l'absence de butée physique, le moteur peut être commandé avec des signaux d'entrée de type logique tels que présentés ci-dessus, sans continuer à forcer lorsque l'extrémité de la course est atteinte. Ainsi, les signaux d'entrée peuvent être directement repris des systèmes industriels 24V existant et commandant des électrovannes, sans nécessiter d'adaptation en amont telle que de nouvelles programmations des automates.

## Revendications

1. Méthode de programmation d'un actuateur électrique comprenant, logés dans un bâti (10),
- un moteur (12) pour être relié à un circuit d'alimentation électrique, faisant tourner un arbre (18) du moteur,
- un pignon (30) porté par l'arbre du moteur,
- une électronique dotée d'une mémoire et d'un microprocesseur pour gérer les différentes opérations à effectuer par l'actuateur,
et comportant, en outre,
- une interface homme-machine (24) pour donner des informations au microprocesseur,
- un élément mobile (19) solidaire d'un élément d'engrènement et relié cinématiquement audit pignon (30) directement ou par l'intermédiaire d'au moins un rouage (32, 34, 38) relié cinématiquement audit pignon, et
- un système de détermination de la position absolue de l'élément mobile,
ladite méthode comprenant les étapes suivantes:
- enclenchement d'un mode d'apprentissage par l'interface homme-machine,
- déplacement manuel de l'élément mobile (19) dans une première position extrême,
- déplacement manuel de l'élément mobile (19) dans une deuxième position extrême,
- enregistrement dans la mémoire des première et deuxième positions extrêmes,
- sortie du mode d'apprentissage par l'interface homme-machine.

2. Méthode selon la revendication 1, **caractérisée en ce qu'**elle comprend, en outre, une étape supplémentaire de définition de la position de repos de l'élément mobile (19).

3. Méthode selon la revendication 2, **caractérisée en ce que** la position de repos du chariot est définie automatiquement au milieu des deux positions extrêmes.

4. Actuateur électrique pour agir sur une pièce et pouvant être programmé par la méthode selon l'une des revendications 1 à 3, comprenant, logés dans un bâti (10),
- un moteur (12) pour être relié à un circuit d'alimentation électrique, faisant tourner un arbre du moteur (18),
- un pignon (30) porté par l'arbre du moteur (12) et,
- une électronique dotée d'un microprocesseur pour gérer les différentes opérations à effectuer par l'actuateur,
et comportant, en outre, une interface homme-machine (24) pour donner des informations au microprocesseur, un élément mobile (19) pour agir sur ladite pièce, solidaire d'un élément d'engrènement relié cinématiquement audit pignon directement ou par l'intermédiaire d'au moins un rouage (32, 34, 38) , et un système de détermination de la position absolue de l'élément mobile.

5. Actuateur selon la revendication 4, **caractérisé en ce qu'**au moins un des rouages et pignon reliant cinématiquement le moteur et l'élément d'engrènement est agencé de manière à effectuer moins d'un tour complet pour que l'élément d'engrènement effectue la totalité de sa course et **en ce que** le système de détermination de la position absolue de l'élément mobile est un codeur rotatif magnétique associé à ce rouage ou à ce pignon et connecté audit microprocesseur.

6. Actuateur selon la revendication 4, dans lequel l'élément d'engrènement est une crémaillère (40), **caractérisé en ce que** la circonférence du pignon (38) ou du rouage en prise avec la crémaillère est supérieure à la longueur utilisée de la crémaillère et **en ce que** le système de détermination de la position absolue de l'élément mobile est un codeur rotatif magnétique associé audit pignon ou audit rouage et connecté audit microprocesseur.

7. Actuateur selon la revendication 4, dans lequel l'élément d'engrènement est un rouage (38) relié cinématiquement audit pignon (30), **caractérisé en ce que** le système de détermination de la position absolue de l'élément mobile comporte un premier (42, 46) et un deuxième (44, 48) codeurs rotatifs magnétiques respectivement associés audit pignon (30) et audit rouage (38) et connectés audit microprocesseur.

8. Actuateur selon l'une des revendications 4 à 7, **caractérisé en ce que** ledit élément mobile est un chariot solidaire de la crémaillère.

9. Actuateur selon l'une des revendications 4 à 7, **caractérisé en ce que** ledit élément mobile est une pince dont l'ouverture et la fermeture sont actionnées par ledit pignon ou avec une roue reliée cinématiquement audit pignon.

10. Actuateur selon l'une des revendications 4 à 7, **caractérisé en ce que** ledit élément mobile est un plateau rotatif.
